# EUROPÄISCHE PATENTANMELDUNG

(11) **EP 1 172 570 A1**
(43) Veröffentlichungstag der Anmeldung: **16.01.2002**
(21) Anmeldenummer: 01116815.0
(22) Anmeldetag: 10.07.2001
(51) Int. Cl.: F16B 15/00

(54) **Nagelplatte und zusammengesetzter Holzträger**

(30) Priorität: 12.07.2000 DE 20012110 U
(71) Anmelder: Wieland Engineering AG, CH-7304 Maienfeld (CH)
(72) Erfinder: Wieland, Heinz, 7304 Maienfeld (CH)
(74) Vertreter: Zwirner, Gottfried, Dipl.-Ing. Dipl.-W.-Ing.

(57) **Zusammenfassung**

Hammerplatten (10) aus Blechmaterial und mit deren Hilfe zusammengesetzte Holzträger aus übereinander gesetzten Holzbalken (1, 2), die durch die Hammerplatten (10) schubfest miteinander verbunden sind. Die Hammerplatten (10) sind mit Nagelausbildungen (19) in wenigstens zwei getrennten Nagelfeldern (11, 12) versehen, wobei senkrechte (21, 23, 25, 26) und waagerechte (22) Stege zwischen den Nagelausbildungen verbleiben, um zu erwartende Schubkräfte zwischen dem ersten und zweiten Holzbalken (1, 2) aufzunehmen.

## Beschreibung

Die Erfindung bezieht sich auf eine Hammerplatte und auf einen zusammengesetzten Holzträger.

Hammerplatten zum Zusammenbau von Fachwerkträgern aus einzelnen Holzstäben sind aus der GB-A 1 295 047 bekannt. Die einzelnen Holzstäbe werden an den Knotenpunkten durch diese Hammerplatten zusammengehalten, die aus jeweils einer Blechmetallplatte mit ausgestanzten Zungen bestehen. Die Zungen sind hakenförmig zu Nägel gebogen, wobei vor Nageleintrieb die Nagelspitze sich in der Ausstanzöffnung und der Hakenknick außerhalb der Plattenebene befinden. Die Hammerplatte weist mehrere Reihen solcher Nagelausbildungen auf, die durch senkrecht aufeinander stehende ("horizontale" und "vertikale") Stege voneinander getrennt sind. Die GB-A 1 295 047 offenbart auch bandförmige Hammerplatten, bei denen plattenartige, mit ausgestanzten Zungen bzw. Nägeln versehene Endteile über ein längliches Brückenteil miteinander verbunden sind. Die Nagel-Endteile sind an zwei zueinander parallelen, im Abstand zugeordneten Hölzern befestigt. Diese bandförmigen Hammerplatten können nur unwesentlichen Schub zwischen den Hölzern übertragen.

Vollholzbalken sind allgemein nur bis zu einer Höhe von 240mm im Handel erhältlich. Wenn höhere Träger benötigt werden, die ein höheres Widerstandsmoment besitzen, dann werden im Allgemeinen sogenannte Brettschichtholzträger eingesetzt. Diese sind jedoch nicht ab Lager erhältlich, sondern müssen extra angefertigt werden und sind deshalb teuer.

Der Erfindung liegt die Aufgabe zugrunde, Hammerplatten anzugeben, mit denen Holzträger aus zwei oder mehreren aufeinandergelegten Holzbalken miteinander verbunden oder zusammengesetzt werden können. Die erfindungsgemäße Hammerplatte wird in Anspruch 1 und ein solcher zusammengesetzter Holzträger wird in Anspruch 6 definiert. Die abhängigen Ansprüche betreffen Ausgestaltungen und Weiterentwicklungen der Erfindung.

Wenn zwei übereinandergelegte Holzbalken schubfest miteinander verbunden werden, erhöht sich das Widerstandsmoment auf etwa das 3,6-fache, je nach dem Grad der Starrheit bzw. Elastizität der Verbindung. Die aufeinandergelegten und verbundenen Holzbalken entwickeln bei ihrer Durchbiegung gegeneinander gerichtete Schubkräfte, welche die verbindenden Hammerplatten auf Scherung beanspruchen. An der Stelle der größten Scherung wird ein ungeschwächter Blechstreifen gelassen und die Anschlußstege in die Nagelfelder hinein werden mit möglichst großem Querschnitt ausgeführt. Ferner wird die Blechstärke gegenüber im Handel befindlichen Hammerplatten erhöht. Auf diese Weise gelingt es, Hammerplatten für den vorgesehenen Zweck der Zusammensetzung von Holzträgern bereitzustellen, ohne dass diese versagen.

Die Erfindung wird anhand der Zeichnung beschrieben.
Dabei zeigt:
- Fig. 1: einen zusammengesetzten Holzträger in perspektivischer Ansicht,
- Fig. 2: ein Nagelfeld
- Fig. 3: Nagelausbildungen von der Seite gesehen.
- Fig. 4: eine zweite Ausführungsform der Hammerplatte,
- Fig. 5: eine dritte Ausführungsform der Hammerplatte und
- Fig. 6: eine vierte Ausführungsform der Hammerplatte.

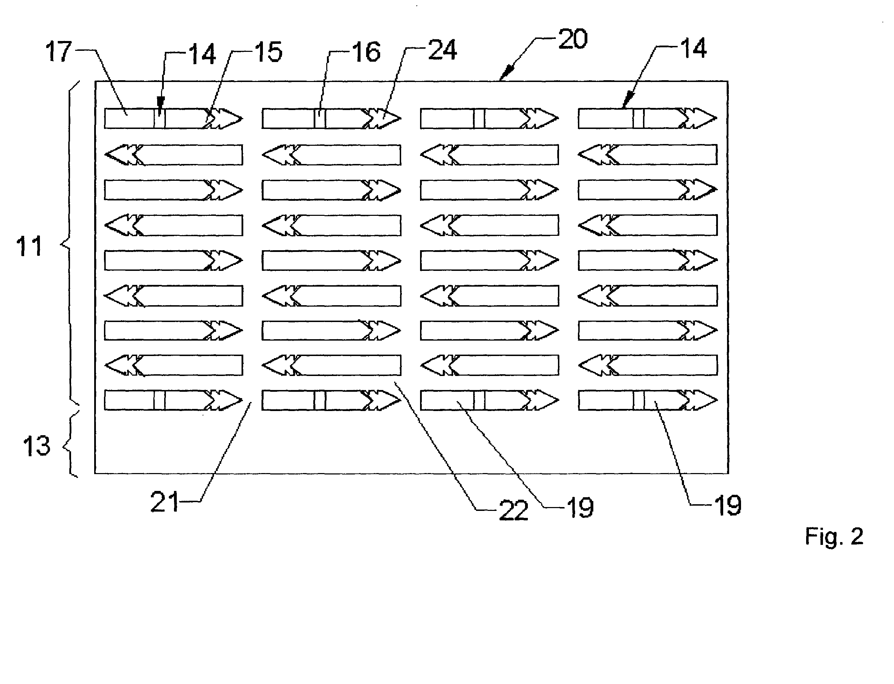

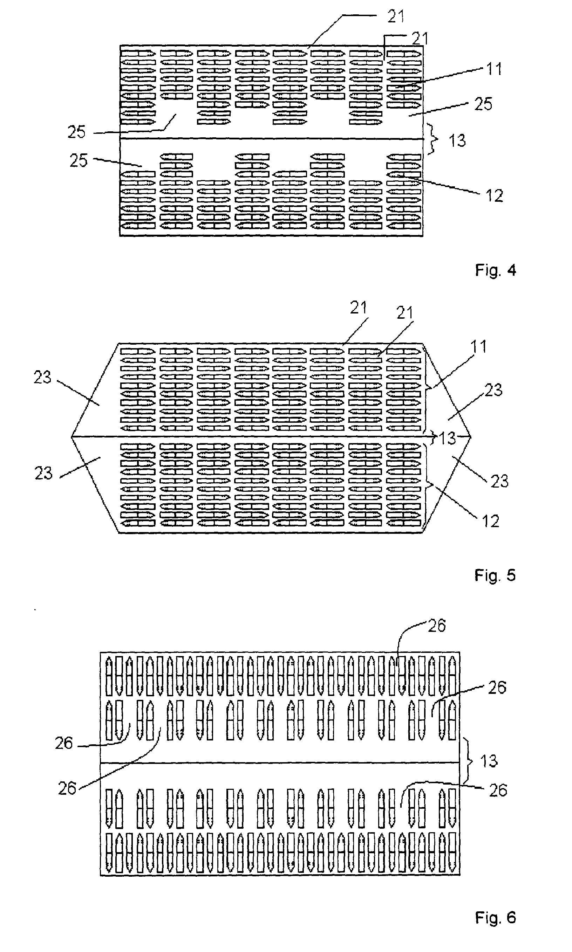

Ein erster Holzbalken 1 ist über einem zweiten Holzbalken 2 angeordnet und die beiden Holzbalken sind über eine Reihe von Hammerplatten 10 aus Stahlblech miteinander verbunden. Jede Hammerplatte weist ein oberes Nagelfeld 11, ein unteres Nagelfeld 12 und einen nagelfreien Materialstreifen 13 auf. Fig. 2 zeigt ein derartiges Nagelfeld bzw. einen Teil hiervon. Die Nagelfelder entstehen dadurch, dass Zungen 14 aus der Stahlblechplatte 20 der Hammerplatte ausgestanzt und hakenförmig gebogen werden, wie am besten aus Fig. 3 ersichtlich.

Die Spitze 15 der Zunge 14 bildet die Nagelspitze. Die Zunge 14 hängt mit ihrer Wurzel 17 an der restlichen Blechplatte 20. Hinter der Spitze 15 befinden sich einige Widerhaken 18. Als Nagelausbildung 19 ist der Teil zwischen Spitze 15 und Abbiegung 16 zu betrachten. Durch die Ausstanzung der Zungen 14 entsteht jeweils eine schlitzförmige Lochung 24 in der Blechplatte 20. Durch diese Lochungen 24 bleiben Querstege 21 und Längsstege 22 stehen, die ein sich kreuzendes Gitter bilden. Die Querstege 21 stehen im Allgemeinen senkrecht auf dem nagelfreien Materialstreifen 13 und bilden die Mittel zur Einleitung des Schubes vom jeweils benachbarten Nagelfeld in das betreffende Nagelfeld, wobei die Längsstege 22 zur Verteilung des Schubes in dem jeweiligen Nagelfeld dienen. Auch eine schräge sich kreuzende Anordnung der Stege wäre möglich, wobei dann die Stege gleichzeitig die Mittel zur Einleitung und zur Verteilung des Schubes bilden.

Der nagelfreie Materialstreifen 13 ist wenigstens so breit, dass die Nägel 19 nicht derart in die Randzonen der Holzbalken 1, 2 geraten, dass ein Splittern des Holzes zu befürchten ist. Der Materialstreifen 13 überdeckt somit den Spalt zwischen den Hölzern 1, 2 mit ausreichender Breite.

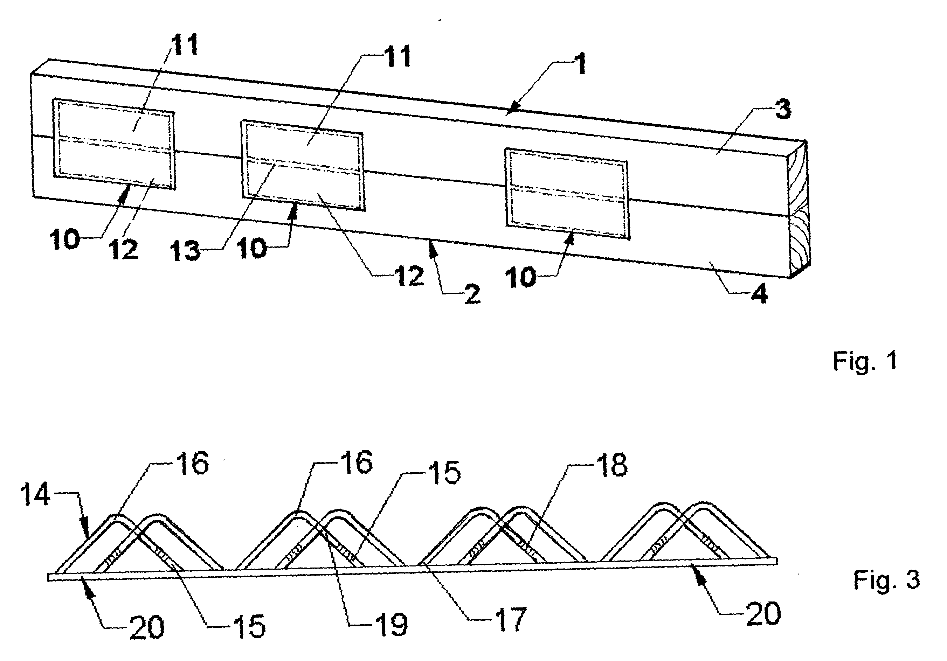

Bei der Herstellung des Holzträgers werden die beiden Holzbalken 1 und 2 eng nebeneinander gelegt und mittels der Hammerplatten 10 aneinander gefesselt. Wie in Fig. 1 dargestellt, werden die Abstände der Hammerplatten voneinander zu den Enden des Holzträgers hin enger gewählt als zur Mitte des Holzträgers hin, weil der Schub der Holzbalken 1 und 2 gegeneinander zu den Enden hin zunimmt. Die Nagelausbildungen 19 werden mittels Hammer oder Presse in das Holz eingetrieben. Aus Gründen der Symmetrie dreht man dann die beiden Balken 1, 2 um und bringt entsprechende Hammerplatten auch auf der anderen Seite der Balken an. Die Holzträger sind zum Einbau mit senkrechten Seitenflächen 3 und 4 bestimmt, da in dieser Stellung das Widerstandsmoment am größten ist.

Die Dicke der Stahlblechplatte 20 richtet sich nach der zu erwartenden Belastung. Es werden Stahlbleche von wenigstens 1,5 mm Dicke verwendet. Die Breite der senkrechten Querstege 21 beträgt mindestens 5 mm. Die Breite der waagerechten Längsstege 22 beträgt 4 mm. Zur Anpassung an gängige Abmessungen von Holz werden die Nagelfelder 11 (oder 12) abgestuft bemessen, und zwar 100 auf 80 mm, 100 auf 160 mm, 100 auf 240 mm und 100 auf 320 mm. Diese Standardgrößen könne jedoch noch nach unten und oben hin erweitert werden.

Der kritische Querschnitt gegenüber den Schubbelastungen ist am Übergang des nagelfreien Streifens 13 zu den Feldern 11 und 12 hin gegeben. Die Summe der Querschnitte der senkrechten Querstege 21 muß groß genug sein, die auftretenden Schublasten aufzunehmen. Deshalb wird in Betracht gezogen, die senkrechten Querstege 21 zu dem nagelfreien Streifen 13 hin breiter zu machen, was auf Kosten der Länge oder der Anzahl der Nägel 19 in diesem Grenzbereich geht (siehe Fig. 4 und 6).

Fig. 4 zeigt, wie durch Fortfall von Nägeln in den Reihen verstärkte Anschluß-Stege 25 benachbart zu dem nagelfreien Streifen 13 gebildet werden. Die verstärkten Anschluß-Stege 25 des oberen Feldes 11 sind gegenüber den verstärkten Anschluß-Stegen 25 des unteren Feldes 12 versetzt angeordnet, so dass sich insgesamt ein zickzackförmiger nagelfreier Streifen 13 ergibt, der die Nagelfelder 11, 12 voneinander trennt.

Fig. 5 zeigt eine Hammerplatte, bei der Schublasten durch zusätzliche dreieckförmige Stege 23 aufgefangen werden. Durch Anordnung dieser Stege am Seitenrand der Hammerplatte kann man das gleiche Stanzwerkzeug verwenden, wie es zur Herstellung der Hammerplatte 10 (Fig. 1 - 3) verwendet worden ist.

Fig. 6 zeigt verstärkte Anschlußstege 26 durch Fortfall jedes dritten Nagels in der zum Streifen 13 benachbarten Nagelreihe.

Die Anordnung der Nagelausbildungen 19 in waagerechter Richtung ist keine Notwenigkeit. Es ist auch möglich, die Ausrichtung der Nägel 19 in dem Feld 11 bzw. 12 senkrecht zu wählen (siehe Fig. 6), oder auch eine gemischte Anordnung vorzusehen. Bei der Anordnung der Lochungen 24 mit senkrechter Schlitzrichtung kann man zur Verbreiterung der senkrechten Stege 21 im Bereich des Streifens 13 auch dadurch gelangen, dass man statt vier nur drei oder zwei dieser schlitzförmigen Lochungen 24 vorsieht. Es werden die Stege 26 gebildet, die in Richtung auf den nagelfreien Streifen 13 in ihrer Breite gestaffelt zunehmen. Dadurch nehmen die generellen Querschnitte der senkrechten Stege mit der Zunahme der Schublasten zu, so dass die spezifischen Belastungen in etwa konstant bleiben.

Die Anordnung der schlitzförmigen Lochungen 24 in senkrechter Richtung (wie in Fig. 6 dargestellt) erfolgt auch dann, wenn man einen leichteren Eintrieb der Nagelausbildungen 19 in Holz wünscht. Wenn nämlich die Breitenausdehnung des Nagels 19 in Faserrichtung des Holzes erfolgt, ist der Nagel leichter einzutreiben.

Wie schon erwähnt, sollen die Nägel so in das Holz eingetrieben werden, dass keine Absplitterungen in den Randzonen der übereinander gelegten Holzbalken erfolgt. Diese Sicherheitsbreite des mittleren, nagelfreien Materialstreifens 13 hängt auch von der Dicke der Nägel 19 ab, die wiederum mit der Dicke der Hammerplatte überein stimmen. Dickere Nägel führen leichter zu Absplitterungen als dünnere Nägel. Der Fachmann ist jedoch in der Lage, die richtige Breite des Materialstreifens 13 herauszufinden, um einerseits der Gefahr der Absplitterung von Holz zu entgehen und andererseits die Größe der Hammerplatte für die Nagelfelder möglichst auszunutzen. Der Abstand der beiden Nagelfelder 11, 12, welcher der Breite des Materialstreifens 13 entspricht, ist jedenfalls klein im Verhältnis zu der Längenabmessung des Materialstreifens 13, wie sich diese aus der Abmessung der Nagelfelder längs ihrer Überdeckung ergibt.

## Patentansprüche

1. Hammerplatte, umfassend eine ebene Blechplatte mit ausgestanzten Zungen (14), die zu Nagelausbildungen (19) gebogen sind und aus der Ebene der Blechplatte herausgebogen sind, wobei sich kreuzende Stege (21, 22) zwischen den Nagelausbildungen (19) verbleiben;
wenigsten ein erstes und ein zweites Nagelfeld (11, 12), die über einen mittleren nagelfreien Materialstreifen (13) miteinander verbunden sind;
**dadurch gekennzeichnet,**
**dass** die beiden Nagelfelder (11, 12) im geringen Abstand voneinander angeordnet sind, wie es den beiden Randzonen von übereinander gelegten Holzbalken entspricht, die mittels der Hammerplatte miteinander zu verbinden sind, wobei als Randzone die bei Nageleintrieb nicht splitterfreie Zone des Holzbalkens definiert ist, und
**dass** der mittlere nagelfreie Materialstreifen (13) zur Übertragung von Schublasten zwischen dem ersten und dem zweiten Nagelfeld ausgebildet ist und dabei mittels verstärkter, sich wenigstens teilweise quer erstreckender Stege (21, 23, 25, 26) die Schublasten in die jeweiligen Nagelfelder (11, 12) einzuleiten ermöglicht.

2. Hammerplatte nach Anspruch 1,
**dadurch gekennzeichnet, dass** ausgehend von dem äußeren Rand jedes Nagelfeldes (11, 12) die Summe der Querschnittsabmessungen der sich wenigstens teilweise quer erstreckenden Stege (21, 23, 25,26) zu dem mittleren nagelfreien Materialstreifen (13) hin generell zunimmt.

3. Hammerplatte nach Anspruch 2,
**dadurch gekennzeichnet, dass** die generelle Zunahme der Querschnittsabmessungen infolge wenigstens eines dreieckförmigen Streifens (23) erzielt wird, der frei von ausgestanzten Zungen ist.

4. Hammerplatte nach Anspruch 2,
**dadurch gekennzeichnet, dass** die generelle Zunahme der Querschnittsabmessungen durch Anschlußstege (25, 26) stufenweise erfolgt, die durch Fortfall von ausgestanzten Zungen nahe des mittleren nagelfreien Materialstreifens (13) erzeugt worden sind.

5. Hammerplatte nach den Ansprüchen 1 bis 4,
**dadurch gekennzeichnet, dass** die Abmessung eines Nagelfeldes 100 mm auf n x 80 mm beträgt,
wobei n = 1, 2, 3 oder 4 ist.

6. Zusammengesetzter Holzträger mit folgenden Merkmalen:
ein erster Holzbalken (1) mit ebenen Seitenflächen (3);
ein zweiter Holzbalken (2) mit ebenen Seitenflächen (4);
der erste Holzbalken (1) ist über dem zweiten Holzbalken (2) angeordnet;
mindestens eine Hammerplatte (10) nach einem der Ansprüche 1 bis 5;
die Nagelausbildungen (19) des ersten Nagelfeldes (11) sind in senkrechte Seitenflächen (3) des ersten Holzbalkens (1) und die die Nagelausbildungen (19) des zweiten Nagelfeldes (12) sind in senkrechte Seitenflächen (4) des zweiten Holzbalkens (2) eingetrieben.

7. Holzträger nach Anspruch 6,
**dadurch gekennzeichnet, dass** die Holzbalken (1, 2) über mehrere Hammerplatten (10) zu beiden Seiten der beiden Holzbalken miteinander verbunden sind.

8. Holzträger nach Anspruch 7,
**dadurch gekennzeichnet, dass** der Abstand der Hammerplatten (10) voneinander im Bereich der Enden der Balken (1, 2) kleiner ist als im Bereich der Mitte des Holzträgers.

9. Holzträger nach einem der Ansprüche 6 bis 8,
**dadurch gekennzeichnet, dass** mehrere Holzbalken (1, 2) übereinander angeordnet und mittels mehrerer Reihen von Nagelplatten (10) miteinander verbunden sind.

10. Holzträger nach einem der Ansprüche 6 bis 9,
**dadurch gekennzeichnet, dass** die Holzbalken (1, 2) mit Normabmessungen für den zusammengesetzten Holzträger verwendet werden.
